(19) Europäisches Patentamt
European Patent Office
Office européen des brevets

(11) **EP 4 506 139 A1**

(12) **EUROPEAN PATENT APPLICATION**

(43) Date of publication:
**12.02.2025   Bulletin 2025/07**

(21) Application number: **24191074.4**

(22) Date of filing: **26.07.2024**

(51) International Patent Classification (IPC):
**B29C 45/76** (2006.01)   B29C 45/00 (2006.01)
**B29K 105/26** (2006.01)

(52) Cooperative Patent Classification (CPC):
**B29C 45/76; B29C 45/0001;** B29C 2945/76066;
B29C 2945/76073; B29C 2945/76076;
B29C 2945/7618; B29C 2945/76287;
B29C 2945/76367; B29C 2945/76551;
B29C 2945/76561; B29C 2945/76565;
B29C 2945/76658; B29C 2945/76846;
B29K 2105/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **07.08.2023   JP 2023128448**

(71) Applicant: **Nissei Plastic Industrial Co., Ltd.
Hanishina-gun, Nagano-ken 389-0693 (JP)**

(72) Inventor: **KOZUKA, Makoto
Nagano-ken (JP)**

(74) Representative: **Haseltine Lake Kempner LLP
Bürkleinstrasse 10
80538 München (DE)**

(54) **METHOD AND APPRATUS FOR ASSISTING MOLDING PERFORMED USING CRUSHED MATERIAL MIXED MATERIAL**

(57)     A virgin material plasticization time Tv, which is a time required for a screw to reach a predetermined plasticization end position Xe when only a virgin material Rv is plasticized, a crushed material plasticization time Ts, which is a time required for the screw to reach the predetermined plasticization end position Xe when only a crushed material Rs is plasticized, are measured and registered as basic time data Do. Actually measured time data Dp are obtained by measuring a crushed material mixed material plasticization time Tm when a molded product is produced by using the crushed material mixed material Rm, the crushed material mixed material plasticization time Tm being a time required for the screw to reach the plasticization end position Xe in a predetermined shot. The crushed material ratio Px in the crushed material mixed material Rm is obtained on the basis of the virgin material plasticization time Tv, the crushed material plasticization time Ts, and the crushed material mixed material plasticization time Tm. An output process is performed on the obtained crushed material ratio Px.

**Fig.7**

## Description

## Technical Field

The present invention relates to a molding assistance method and a molding assistance apparatus for an injection molding machine which performs injection molding by plasticizing a crushed material mixed material prepared by mixing a virgin material and a crushed material at a predetermined ratio.

## Background Art

In general, in a production plant or the like which uses an injection molding machine, a virgin material is used as a resin material for molding, and, in addition, unnecessary molded products (e.g., sprues and runners and defective molded products) generated after molding are frequently recycled as a resin material for molding. In this case, these unnecessary molded products are finely crushed so as to prepare a crushed material, and this crushed material is mixed into the virgin material (pellets) at a predetermined ratio and the resultant mixture is used as a crushed material mixed material.

Conventionally known molding means for performing molding by utilizing such a crushed material mixed material include a plastic molding mechanism disclosed in Patent Document 1 and a resin molding apparatus with a sprue/runner recycling function disclosed in Patent Document 2.

An object of the plastic molding mechanism disclosed in Patent Document 1 is to provide a plastic molding mechanism for recycling recovered molded products in which an operation of mixing a coarsely crushed material and a raw material is performed stably and efficiently. Specifically, the plastic molding mechanism comprises a transport means for directly transporting a recovered molded product taken out from a molding die to a position above a material drop port of an injection device, a coarsely crushing means which is disposed on the upper surface of a raw material feed amount adjusting means fixed to an upper portion of the material drop port and which coarsely crushes the transported, recovered molded product, and the raw material feed amount adjusting means which has a through-hole for dropping the recovered molded product coarsely crushed by the coarsely crushing means into the material drop port, and transports the raw material to the through-hole, while adjusting the feed amount, so as to mix the recovered molded product and the raw material.

An object of the resin molding apparatus disclosed in Patent Document 2 is to eliminate the necessity of separately providing a large-scale device for transporting crushed sprues and runners to a molding machine, simplify the structure of the entire resin molding device, and facilitate cleaning performed when the type of resin is changed. Specifically, the resin molding apparatus comprises a removing means for removing a sprue and a runner from a resin molding position of a molding machine, and a crushing machine for crushing the sprue and runner removed by the removing means, wherein a crushed material discharge port of the crushing machine is connected to the molding machine so that a crushed material, which is obtained by crushing the sprue and the runner supplied from the removing means, is supplied to the molding machine.

## Summary of Invention

## Technical Problem

However, the above-described conventional molding means using a crushed material mixed material has the following problem.

Namely, since individual fragments of a crushed material used are not constant in terms of shape and size and have random forms, when the crushed material is mixed with a virgin material, its mixing ratio is likely to vary. Specifically, even when a virgin material (pellets) and a crushed material are mixed at a ratio of 70wt%: 30wt% (weight ratio), in a molded product, they are not present at the ratio of 70:30, and variation is likely to occur.

In the case where it has been confirmed that, when the amount of the crushed material is, for example, 30 wt% or less, no problem occurs in terms of quality, including strength, etc., if a molded product in which the amount of the crushed material is greater than 30 wt% is produced due to variation, it may be an inappropriate molded product, which conceivably results in a failure to guarantee quality. Therefore, rather than the ratio at the time of mixing, the mixing ratio in the actual molded product is important.

However, since the crushed material and the virgin material are mixed together in a molten state, it is not easy to check the mixing ratio in an actual molded product. As a result, when the amount of the crushed material is excessively large, there arises the possibility that quality cannot be guaranteed, and, when the amount of the crushed material is excessively small, it becomes impossible to effectively use (recycle) the crushed material. Therefore, heretofore, there has been a demand for a highly effective and accurate obtaining means so as to check the mixing ratio in the actual molded product.

An object of the present invention is to provide a method and an apparatus 1 which assist molding performed by using a crushed material mixed material Rm and which have solved the problems present in the background art.

## Solution to Problem

A molding assistance method according to the present invention is applied to the case where a crushed material mixed material Rm prepared by mixing a virgin material Rv and a crushed material Rs at a predetermined ratio (Px) is plasticized for injection molding.

The molding assistance method being characterized by comprising:

measuring beforehand a virgin material plasticization time Tv, which is a time required for a screw to reach a predetermined plasticization end position Xe when only the virgin material Rv used for the crushed material mixed material Rm is plasticized under predetermined plasticization conditions, a crushed material plasticization time Ts, which is a time required for the screw to reach the predetermined plasticization end position Xe when only the crushed material Rs used for the crushed material mixed material Rm is plasticized under the plasticization conditions, and registering the virgin material plasticization time Tv and the crushed material plasticization time Ts as basic time data Do;

obtaining actually measured time data Dp by measuring a crushed material mixed material plasticization time Tm when a molded product is produced by using the crushed material mixed material Rm, the crushed material mixed material plasticization time Tm being a time required for the screw to reach the plasticization end position Xe in a predetermined shot; and

obtaining the crushed material ratio Px in the crushed material mixed material Rm on the basis of the virgin material plasticization time Tv, the crushed material plasticization time Ts, and the crushed material mixed material plasticization time Tm, and performing an output process of outputting the obtained crushed material ratio Px.

A molding assistance apparatus 1 according to the present invention is applied to an injection molding machine M in which a crushed material mixed material Rm prepared by mixing a virgin material Rv and a crushed material Rs at a predetermined ratio (Px) is plasticized for injection molding.

The molding assistance apparatus being characterized by comprising a molding machine controller 2 which includes

a plasticization condition setting functional section Fs for setting predetermined plasticization conditions;

a basic time data obtaining functional section Fo which measures a virgin material plasticization time Tv, which is a time required for a screw to reach a predetermined plasticization end position Xe when only the virgin material Rv used for the crushed material mixed material Rm is plasticized under predetermined plasticization conditions, a crushed material plasticization time Ts, which is a time required for the screw to reach the predetermined plasticization end position Xe when only the crushed material Rs used for the crushed material mixed material Rm is plasticized under the plasticization conditions, and registers the virgin material plasticization time Tv and the crushed material plasticization time Ts as basic time data Do;

an actually measured time data obtaining functional section Fp which measures a crushed material mixed material plasticization time Tm when a molded product is produced by using the crushed material mixed material Rm, the crushed material mixed material plasticization time Tm being a time required for the screw to reach the plasticization end position Xe in a predetermined shot, the actually measured time data obtaining functional section obtaining the measured crushed material mixed material plasticization time as actually measured time data Dp;

a crushed material ratio computing functional section Fa which obtains the crushed material ratio Px in the crushed material mixed material Rm on the basis of the virgin material plasticization time Tv, the crushed material plasticization time Ts, and the crushed material mixed material plasticization time Tm; and

an output processing functional section Fe which performs an output process of outputting the obtained crushed material ratio Px.

When the molding assistance method according to the invention is implemented, the crushed material ratio may be obtained by the following computing equation:

$$Px = [(Tm - Tv)/ (Ts - Tv)] \times 100 \ (wt\%)$$

where Px represents the crushed material ratio (wt%), Tm represents the crushed material mixed material plasticization time (sec), Tv represents the virgin material plasticization time (sec), and Ts represents the crushed material plasticization time (sec).

In addition, the crushed material ratio Px may be obtained in each shot or in shots at predetermined intervals and is outputted. Further, after obtainment of the crushed material mixed material plasticization time Tm, a delay time Td needed for the crushed material ratio Px to reflect on a molded product may be computed on the basis of at least the capacity of the screw 3, and the crushed material ratio Px may be correlated with that molded product on the basis of the delay time Td.

Moreover, an upper limit value Pxu and/or a lower limit value Pxd may be set for the crushed material ratio Px, and a quality determination process of determining that a molded product whose crushed material ratio is equal to or lower than the upper limit value Pxu and/or is equal to or higher than the lower limit value Pxd is a conforming product.

When the molding assistance apparatus 1 according to the present invention is implemented, the plasticization condition setting functional section Fs may set, as the plasticization conditions, one, two or more setting items selected from the rotational speed of the screw 3, a back pressure applied to the screw 3, a set temperature of a heating cylinder, and the plasticization end position Xe of the screw. In addition, the molding machine controller 2 may include a quality determining functional section Fj which sets an upper limit value Pxu and/or a lower limit value Pxd for the crushed material ratio Px obtained by the crushed material ratio computing functional section Fa and determines that a molded product whose crushed material ratio is equal to or lower than the upper limit value Pxu and/or is equal to or higher than the lower limit value Pxd is a conforming product. Moreover, the molding machine controller 2 may include, as the output processing functional section Fe, a display 2d which displays the crushed material ratio Px graphically and/or by using a numerical value, and the molding machine controller 2 may include the output processing functional section Fe which determines that a molded product whose crushed material ratio is higher than the upper limit value Pxu and/or is lower than the lower limit Pxd is an inappropriate molded product and performs a predetermined output process, including displaying an alarm, by using the display 2d.

**Advantageous Effects of Invention**

The molding assistance method and the molding assistance apparatus 1 according to the present invention for assisting molding performed by using the crushed material mixed material Rm achieve the following remarkable effects.

(1) The virgin material plasticization time Tv, which is the time required for the screw to reach the predetermined plasticization end position Xe when only the virgin material Rv is plasticized, and the crushed material plasticization time Ts, which is the time required for the screw to reach the predetermined plasticization end position Xe when only the crushed material Rs is plasticized, are measured and registered as the basic time data Do; the actually measured time data Dp is obtained by measuring the crushed material mixed material plasticization time Tm, which is the time required for the screw to reach the predetermined plasticization end position Xe in a predetermined shot when a molded product is produced by using the crushed material mixed material Rm; the crushed material ratio Px in the crushed material mixed material Rm is obtained on the basis of the virgin material plasticization time Tv, the crushed material plasticization time Ts, and the crushed material mixed material plasticization time Tm, and an output process of outputting the obtained crushed material ratio Px is performed. Therefore, the mixing ratio Px of the crushed material Rs in the actual molded product, which is high in accuracy and validity, can be obtained easily. Consequently, it is possible to eliminate the problem of the possibility arising that the amount of the crushed material Rs is excessively large and the quality cannot be guaranteed and to eliminate the problem that the amount of the crushed material Rs is excessively small and the crushed material Rs cannot be recycled sufficiently.

(2) In a preferred mode of the molding assistance method in which the crushed material ratio Px (wt%) is obtained in accordance with a computing equation of $Px = [(Tm - Tv)/(Ts - Tv)] \times 100$ (wt%), where Tm represents the crushed material mixed material plasticization time (sec), Tv represents the virgin material plasticization time (sec), and Ts represents the crushed material plasticization time (sec), since the crushed material ratio Px can be obtained by using a relatively simple computing equation, the accurate crushed material ratio Px can be obtained quickly and easily.

(3) In a preferred mode of the molding assistance method in which the crushed material ratio Px is obtained in each shot or in shots at predetermined intervals and is outputted, since the crushed material ratio Px can be obtained in arbitrarily determined shots or at arbitrarily determined shot intervals, the crushed material ratio Px can be obtained at a frequency determined in accordance with the purpose; for example, the crushed material ratio Px is obtained in each shot when the variation of the crushed material Rs is large, and the crushed material ratio Px is obtained at intervals, each corresponding to a plurality of shots, when the variation of the crushed material Rs is small. Therefore, the molding assisting method is excellent in flexibility and convenience.

(4) In a preferred mode of the molding assistance method in which, after obtainment of the crushed material mixed material plasticization time Tm, a delay time Td needed for the crushed material ratio to reflect on a molded product is computed on the basis of at least the capacity of the screw 3, and the crushed material ratio Px is correlated with that molded product on the basis of the delay time Td, since it is possible to render the computed crushed material ratio Px coincident with the actual crushed material ratio Px of the molded product, the accuracy and reliability of the crushed material ratio Px can be increased.

(5) In a preferred mode of the molding assistance apparatus in which the molding machine controller 2 includes the quality determining functional section Fj which sets an upper limit value Pxu and/or a lower limit value Pxd for the crushed material ratio Px obtained by the crushed material ratio computing functional section Fa and determines that a molded product whose crushed material ratio is equal to or lower than the upper limit value Pxu and/or is equal to or higher than the lower limit value Pxd is a conforming product, since the quality determination for molded products can be performed easily and accurately, the qualities and reliabilities of molded products can be further secured.

(6) In a preferred mode of the molding assistance apparatus in which the plasticization condition setting functional section Fs is configured to set, as the plasticization conditions, one, two or more setting items selected from the rotational speed of the screw 3, a back pressure applied to the screw 3, a set temperature of a heating cylinder, and the plasticization end position $Xe$ of the screw 3, since the plasticization conditions of the same level as those in the actual production step can be set, it is possible to obtain a rational and reliable crushed material ratio $Px$.

(7) In a preferred mode of the molding assistance apparatus in which the output processing functional section Fe is configured to provide a display 2d which displays the crushed material ratio $Px$ graphically and/or by using a numerical value, since an operator can easily check the crushed material ratio $Px$ by visual means, the actual state of the crushed material ratio $Px$ can be checked quickly and reliably.

(8) In a preferred mode of the molding assistance apparatus in which the molding machine controller 2 is configured to include the output processing functional section Fe which determines that a molded product whose crushed material ratio is higher than the upper limit value $Pxu$ and/or is lower than the lower limit value $Pxd$ is an inappropriate molded product and performs a predetermined output process, including displaying an alarm, by using the display 2d, since the operator can easily and reliably determine generation of an inappropriate molded product, the operator can perform a necessary error-coping process, such as disposing of that molded product or changing the plasticization conditions.

**Brief Description of Drawings**

Fig.1 is a flowchart showing the steps of a process of obtaining basic time data in a molding assistance method according to a preferred embodiment of the present invention which assists molding performed by using a crushed material mixed material;

Fig. 2 is a flowchart showing the steps of a process of obtaining actually measured time data in the molding assistance method, the process being performed at the time of production;

Fig.3 is a schematic view showing the mechanical structure of an injection molding machine which can perform the molding assistance method;

Fig.4 is a block diagram of a processing system (control system) in the injection molding machine which can perform the molding assistance method;

Fig.5 is a characteristic graph showing the relation between crushed material ratio and average plasticization time, which is used in the molding assistance method;

Fig.6 is a fluctuation diagram showing crushed material ratio computed values in shots, represented by shot numbers, at the time when the molding assistance method was performed; and

Fig.7 is a screen diagram showing an example of a display window of a display provided in a molding assistance apparatus according to the preferred embodiment of the present invention which assists molding performed by using a crushed material mixed material.

**Brief Description of Drawings**

Next, a preferred embodiment of the present invention will be described in detail based on the drawings.

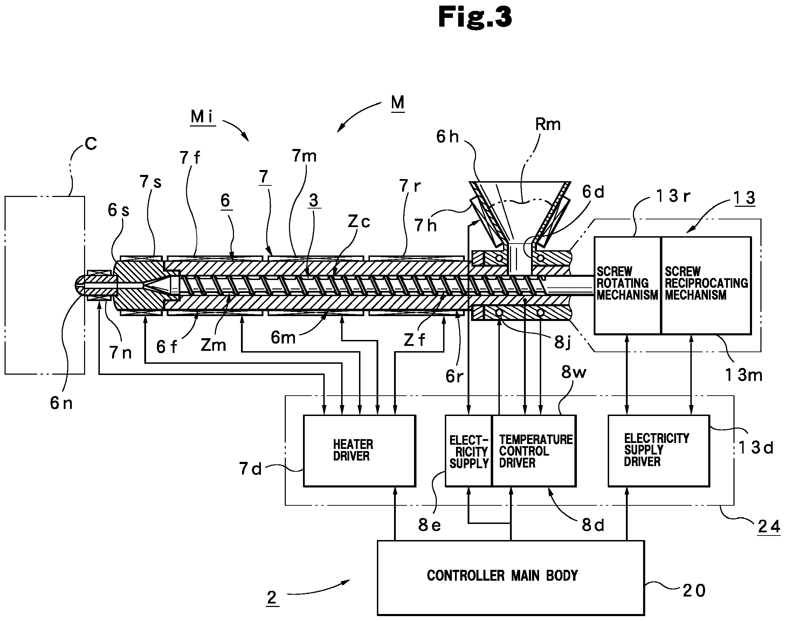

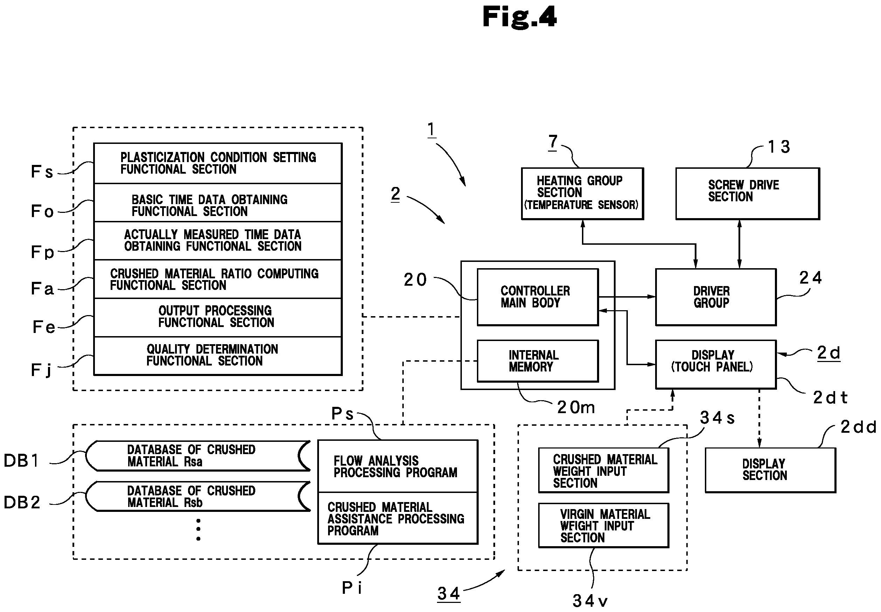

First, the structure of an injection molding machine M which can use a molding assistance method according to the preferred embodiment for assisting molding performed by using a crushed material mixed material will be described briefly with reference to Figs. 3 and 4.

Fig. 3 shows the injection molding machine M; in particular, an injection machine Mi from which a mold clamping device is omitted. The injection machine Mi includes a heating cylinder 6. A nozzle 6n is provided at a forward end portion of the heating cylinder 6 via a head portion 6s. The nozzle 6n has a function of injecting a molten resin in the heating cylinder 6 into a die C, which is indicated by an imaginary line.

A hopper 6h is provided in an upper portion of the heating cylinder 6 such that the hopper 6h is located near the rear end of the heating cylinder 6. A lower end opening of the hopper 6h communicates with the interior of the heating cylinder 6 through a material drop port 6d formed in the heating cylinder 6 to penetrate the heating cylinder 6. As a result, a crushed material mixed material Rm within the hopper 6h is supplied to the interior of the heating cylinder 6 through the material drop port 6d. The crushed material mixed material Rm is a resin material mixture produced by mixing a virgin material Rv and a crushed material Rs at a predetermined ratio $Px$.

Notably, in Fig. 3, reference numeral 7h denotes a heater which is attached to an outer circumferential surface of the hopper 6h and heats the resin material Rm stored in the hopper 6h, and reference numeral 8j denotes a water jacket formed in the heating cylinder 6 to be located around the material drop port 6d. The heater 7h is connected to an electricity supply circuit 8e in a temperature control driver 8d, and the water jacket 8j is connected to a temperature control water circulation circuit 8w in the temperature control driver 8d. The temperature control water circulation circuit 8w can cause a temperature-controlled water medium (hot water or cooling water) to circulate through the water jacket 8j, thereby controlling the temperature of (heating or cooling) the resin material Rm passing through the material drop port 6d.

The electricity supply circuit 8e and the temperature control water circulation circuit 8w are connected to a controller main body 20. Thus, control instructions for the electricity supply circuit 8e and the temperature control water circulation circuit 8w are given from the controller main body 20 to the temperature control driver 8d.

A screw 3 is disposed in the heating cylinder 6 in such a manner that the screw 3 can rotate and can move forward and backward. Notably, the screw surface is coated with a predetermined surface material (metal) in consideration of durability, etc. The screw 3 has a metering zone Zm, a compression zone Zc, and a feed zone Zf, which are arranged in this order from a forward side toward a rearward side. A rear end portion of the screw 3 is coupled with a screw drive section 13. The screw drive section 13 includes a screw rotating mechanism 13r for rotating the screw 3 and a screw reciprocating mechanism 13m for advancing and retracting the screw 3. In the illustrated example, a system for driving the screw rotating mechanism 13r and the screw reciprocating mechanism 13m is an electrical system in which electric motors are used for driving them. However, the driving system may be a hydraulic system in which a hydric circuit is used for driving them, and no limitation is imposed on the drive system. The screw rotating mechanism 13r and the screw reciprocating mechanism 13m are connected to an electricity supply driver 13d, and the electricity supply driver 13d is connected to the controller main body 20. Thus, control instructions for the screw rotating mechanism 13r and the screw reciprocating mechanism 13m are given from the controller main body 20 to the electricity supply driver 13d. Physical quantities such as the speed and position of the screw 3 are detected by a speed sensor, a position sensor, etc., which are not illustrated in the drawing, and their detection signals are given to the electricity supply driver 13d.

The heating cylinder 6 has a heating cylinder forward portion 6f, a heating cylinder middle portion 6m, and a heating cylinder rear portion 6r, which are arranged in this order from the forward side toward the rearward side. A forward portion heating section 7f, a middle portion heating section 7m, and a rear portion heating section 7r are respectively provided on the outer circumferential surfaces of the portions 6f, 6m, and 6r. Similarly, a head heating section 7s is provided on the outer circumferential surface of the head portion 6s, and a nozzle heating section 7n is provided on the outer circumferential surface of the nozzle 6n. Each of these heating sections 7f, 7m, 7r, 7s, and 7n can be composed of a band heater or the like. The nozzle heating section 7n, the head heating section 7s, the forward portion heating section 7f, the middle portion heating section 7m, and the rear portion heating section 7r constitute a heating group section 7 (Fig. 4). This heating group section 7 is connected to a heater driver 7d, and the heater driver 7d is connected to the controller main body 20. Thus, control instructions for the respective heating sections 7f, 7m, 7r, 7s, and 7n are given from the controller main body 20 to the heater driver 7d. Their heating temperatures are detected by unillustrated temperatures sensors (thermocouples, etc.) and their detection signals are given to the heater driver 7d.

Fig. 4 shows a molding machine controller 2 which controls the entirety of the injection molding machine M. The molding machine controller 2 includes the above-described controller main body 20 and a display 2d connected to the controller main body 20. The controller main body 20 includes pieces of hardware such as a CPU and an internal memory 20m and provides a computer function. The display 2d has a display section 2dd for performing necessary information display, and a touch panel 2dt is added thereto. By using this touch panel 2dt, an operator can perform various types of input operations such as inputting, setting, and selection. Also, a driver group 24 for driving (activating) various types of actuators is connected to the controller main body 20. This driver group 24 includes the above-described temperature control driver 8d, including the electricity supply circuit 8e and the temperature control water circulation circuit 8w, the above-described electricity supply driver 13d, and the above-described heater driver 7d, which are shown in Fig. 3.

Accordingly, the molding machine controller 2 includes an HMI (human machine interface) control system and a PLC (programable logic controller) control system, and a PLC program and an HMI program are stored in the internal memory 2m. Sequence operations of the injection molding machine M in various steps, monitoring of the injection molding machine M, etc. are executed by the PLC program. Setting and display of operation parameters of the injection molding machine M, display of operation monitor data of the injection molding machine M, etc. are executed by the HMI program. Notably, in addition to the above-described programs, a flow analysis processing program and a crushed material assistance processing program Pi are stored in the internal memory 20m.

Also, in the internal memory 20m attached to the controller main body 20, in connection with the present invention, an application program for realizing the molding assistance method according to the present embodiment; i.e., the crushed material assistance processing program Pi, is stored, and the flow analysis processing program Ps is stored. Notably, as to the flow analysis processing program Ps, a molding assistance apparatus of an injection molding machine which has already been proposed by the present applicant (see Japanese Patent Application Laid-Open No. 2020-1183 and Japanese Patent Application No. 2021-121959) can be utilized. Namely, accurate information (data) of the molten state of a resin material can be numerically estimated by the estimation processing function.

The molding machine controller 2 includes, as major functional sections related to the molding assistance apparatus 1, a plasticization condition setting functional section Fs, a basic time data obtaining functional section Fo, an actually measured time data obtaining functional section Fp, a crushed material ratio computing functional section Fa, and an output processing functional section Fe, wherein the molding assistance method according to the the present embodiment for assisting molding performed by using the crushed material mixed material Rm is executed on the basis of the above-described crushed material assistance processing program Pi.

The plasticization condition setting functional section Fs sets plasticization conditions determined beforehand.

The basic time data obtaining functional section Fo measures a virgin material plasticization time Tv, which is the time needed for the screw 3 to reach a predetermined plasticization end position Xe when only the virgin material Rv used for the crushed material mixed material Rm is plasticized under the plasticization conditions, measures a crushed material plasticization time Ts, which is the time needed for the screw 3 to reach the predetermined plasticization end position Xe when only the crushed material Rs used for the crushed material mixed material Rm is plasticized under the plasticization conditions, and registers the virgin material plasticization time Tv and the crushed material plasticization time Ts as basic time data Do.

The actually measured time data obtaining functional section Fp measures a crushed material mixed material plasticization time Tm, which is the time needed for the screw 3 to reach the plasticization end position Xe in a predetermined shot when a molded product is produced by using the crushed material mixed material Rm, and uses the crushed material mixed material plasticization time Tm as actually measured time data Dp.

The crushed material ratio computing functional section Fa obtains the crushed material ratio Px in the crushed material mixed material Rm on the basis of the virgin material plasticization time Tv, the crushed material plasticization time Ts, and the crushed material mixed material plasticization time Tm.

The output processing functional section Fe performs an output process of outputting the obtained crushed material ratio Px.

Next, the principle of the molding assistance method (the molding assistance apparatus 1) according to the present embodiment will be described with reference to Figs. 4 to 7.

Usually, a production plant or the like which uses the injection molding machine M, unnecessary molded products, such as sprues and runners and defective molded products, are generated after molding. Therefore, in particular, in the case where molded products are not required much to be high in mechanical strength and quality, it is not uncommon to recycle the above-mentioned unnecessary molded products so as to use them, as resin materials for molding, in addition to a virgin material such as pellets.

When the unnecessary molded products are recycled, the unnecessary molded products are finely crushed so to prepare a crushed material, and this crushed material is mixed into the virgin material at a predetermined ratio and is used as a crushed material mixed material. In general, the unnecessary molded products are crushed using a crushing machine so as to obtain a crushed material. However, fragments of the obtained crushed material Rs are random in terms of shape and size. As a result, at the time of plasticization, voids are generated in the molten resin within the heating cylinder 6, which results in insufficient melting of the resin and generation of a variation in the molten state. These are likely to lead to a decrease in molding quality and an increase in the number of molding failures. Therefore, there has been a drawback that it is not easy to perform stable molding and production.

Specifically, even in the case where, at the time of production, the crushed material ratio Px is set to 30 wt% (the crushed material: 30 wt%, the virgin material: 70 wt%) as a molding condition beforehand, the amount of the crushed material Rs contained in actual molded products varies. As a result, there has been a drawback that many problems occur; for example, the amount of the crushed material Rs is excessively large and therefore quality cannot be guaranteed, or the amount of the crushed material Rs is excessively small and therefore the crushed material Rs cannot be recycled sufficiently.

Therefore, in the present invention, the inventors have paid attention to the nature of the crushed material Rs; specifically, the possibility that resin voids generated within the heating cylinder 6 during plasticization or behavior of the crushed resin Rs in relation to the heating cylinder 6 and the screw 3 influence the plasticization time; i.e., the possibility that, the larger the amount of the crushed material Rs, the longer the needed plasticization time, and the smaller amount of the crushed material Rs, the shorter the needed plasticization time. The inventors verified it.

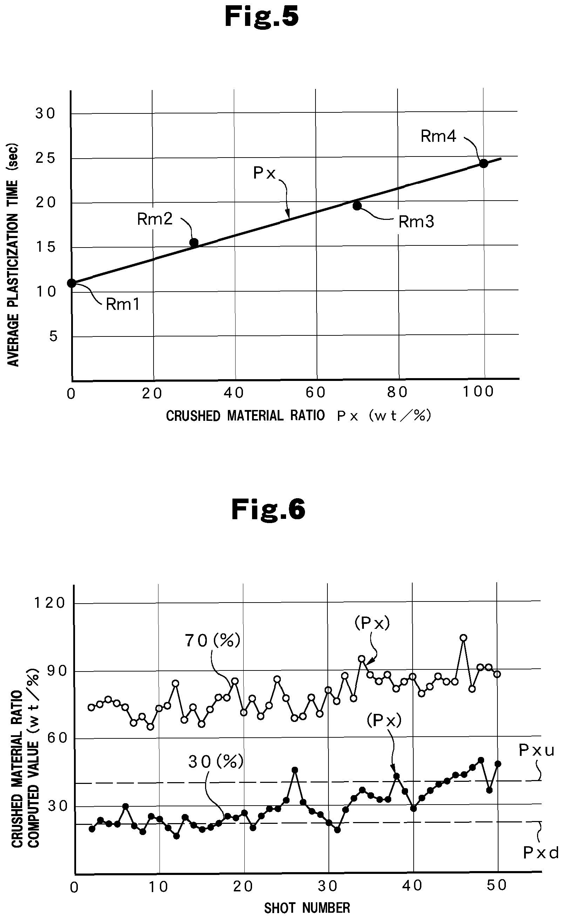

Fig. 5 shows a change in average plasticization time (sec) when the crushed material ratio Px (namely, the mixing ratio of the crushed material Rs (wt%) to the virgin material Rv (wt%)) was changed. Specially, Fig. 5 shows the measured average plasticization times (sec) of a crushed material mixed material Rm1 in which the amount of the virgin material Rv was 100 wt% and the amount of the crushed material Rs was 0 wt%, a crushed material mixed material Rm2 in which the amount of the virgin material Rv was 70 wt% and the amount of the crushed material Rs was 30 wt%, a crushed material mixed material Rm3 in which the amount of the virgin material Rv was 30 wt% and the amount of the crushed material Rs was 70 wt%, and a crushed material mixed material Rm4 in which the amount of the virgin material Rv was 0 wt% and the amount of the crushed material Rs was 100 wt%.

As is apparent from Fig. 5, the crushed material ratio (the mixing ratio) Px and the average plasticization time (sec) have a clear correlation therebetween, and the plasticization time changes linearly with the amount of the crushed material. Namely, actual measurement of the plasticization time enables estimation of the crushed material ratio Px corresponding to the actually measured time.

Therefore, the crushed material ratio Px (wt%) is obtained by using the following estimation equation (computing equation).

$$Px = [(Tm - Tv)/ (Ts - Tv)] \times 100 \text{ (wt\%)}$$

In the equation, Tm represents the crushed material mixed material plasticization time (sec), Tv represents the virgin material plasticization time (sec), and Ts represents the crushed material plasticization time (sec).

The computation process using this computing equation can be executed by the crushed material ratio computing functional section Fa. Since the crushed material ratio Px can be obtained by using a relatively simple computing equation, the accurate crushed material ratio Px can be obtained quickly and easily.

Fig. 6 shows a fluctuation graph showing fluctuations of the crushed material ratio computed values in respective shots, represented by shot numbers. Notably, Fig. 6 shows a fluctuation graph showing fluctuations of the crushed material ratio obtained in each shot. However, during actual production, the crushed material ratio may be obtained in shots at predetermined intervals. Since the crushed material ratio Px can be obtained in arbitrarily determined shots or at arbitrarily determined shot intervals, the crushed material ratio Px can be obtained at a frequency determined in accordance with the purpose; for example, the crushed material ratio Px is obtained in each shot when the variation of the crushed material Rs is large, and the crushed material ratio Px is obtained at intervals, each corresponding to a plurality of shots, when the variation of the crushed material Rs is small. Therefore, the molding assisting method is excellent in flexibility and convenience. Fig. 6 shows the case where two types of crushed material mixed materials Rm were used and their crushed material ratios Px (setting ratios) were set to 30 wt% and 70 wt%, respectively. As is apparent from Fig. 6, variation occurs in each shot.

Accordingly, for example, by setting an upper limit value Pxu and the lower limit value Pxd for the variation curve for the case where the set crushed material ratio is 30 wt% shown in Fig. 6, the quality determination can be performed by the quality determining functional section Fj provided in the molding machine controller 2. Namely, in the molding machine controller 2, one of the upper limit value Pxu and the lower limit value Pxd or both the upper limit value Pxu and the lower limit value Pxd are set for the crushed material ratio Px obtained by the crushed material ratio computing functional section Fa. Thus, molded products whose crushed material ratios Px are equal to lower than the upper limit value Pxu and/or are equal to or higher than the lower limit value Pxd can be determined to be a conforming product. In the case where such a quality determining functional section Fj is provided, since the quality determination for molded products can be performed easily and accurately, the qualities and reliabilities of molded products can be further secured.

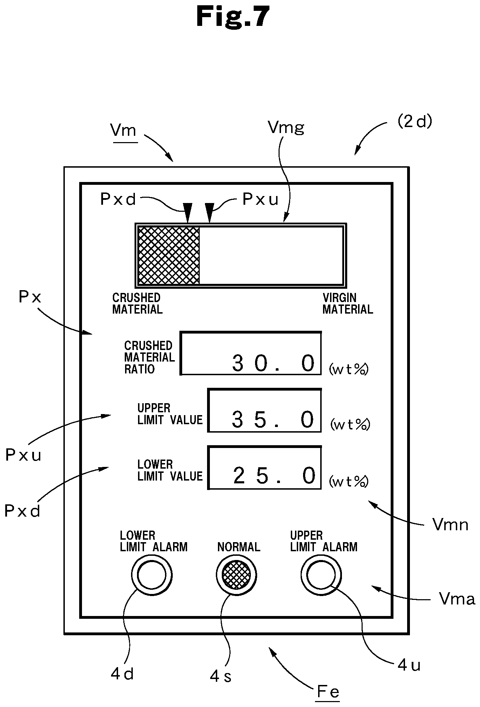

Furthermore, since the molding machine controller 2 has the output processing functional section Fe, it is possible to provide a display screen Vm (shown as an example in Fig. 7) on the display 2d and display in real time a piece of information related to the crushed material ratio Px. The display screen Vm shown as an example has a graphic display section Vmg which is provided at an uppermost portion of the display screen Vm and which graphically displays the crushed material ratio Px. In the graphic display section Vmg, the crushed material ratio Px is displayed by a laterally extending bar graph, and the upper limit value Pxu and the lower limit value Pxd are indicated by triangular indicator marks. Fig. 7 shows a state in which the crushed material ratio Px is 30wt%, the upper limit value Pxu is set to 35 wt%, and the lower limit value Pxd is set to 25 wt%. In addition, a numerical value display section Vmn is provided on the lower side of the graphic display section Vmg. In the numerical value display section Vmn, the actually measured crushed material ratio Px, the set upper limit value Pxu, and the set lower limit value Pxd are displayed. An alarm display section Vma is provided in a lowermost portion of the display screen Vm located on the lower side of the numerical value display section Vmn. In this alarm display section Vma, a normal display lamp 4s is disposed at a center position, an upper limit alarm display lamp 4u is disposed on the right side of the normal display lamp 4s, and a lower limit alarm display lamp 4d is disposed on the left side of the normal display lamp 4s. Fig. 7 shows a state in which the normal display lamp 4s is on.

On this display screen Vm, the crushed material ratio Px is displayed in real time by the graphic display section Vmg and the numerical value display section Vmn, and, when the crushed material ratio Px does not deviate from the range between the upper limit value Pxu and the lower limit value Pxd set in the numerical display section Vmn, the normal display lamp 4s is on. Fig. 7 shows this state. Meanwhile, when the crushed material ratio Px has deviated from the range between the upper limit value Pxu and the lower limit value Pxd (i.e., has become higher than the upper limit value Pxu or lower than the lower limit value Pxd), the upper limit alarm display lamp 4u (which corresponds to the upper limit value Pxu) or the lower limit alarm display lamp 4d (which corresponds to the lower limit value Pxd) can be turned on.

In the case where, as described above, the output processing functional section Fe is configured such that the display screen Vm having a numerical value display section and/or a graphic display section for displaying the crushed material ratio Px is provided on the display 2d, since an operator can easily check the crushed material ratio Px by visual means, the actual state of the crushed material ratio Px can be checked quickly and reliably.

In addition, in the case where an alarm display section is provided on the display screen Vm of the display 2d, and the output processing functional section Fe determines that a molded product whose crushed material ratio is higher than the upper limit value Pxu and/or lower than the lower limit value Pxd is an inappropriate molded product and performs a predetermined output process for the inappropriate molded product by using the alarm display section, since the operator can easily and reliably determine generation of an inappropriate molded product, the operator can quickly perform a necessary error-coping process, such as disposing of that molded product or changing the plasticization conditions.

Notably, when the crushed material ratio Px is obtained, after obtaining the crushed material mixed material plasticization time Tm, it is possible to calculate a delay time td, needed for the crushed material ratio Px to reflect on a molded product, on the basis of at least the capacity of the screw 3, and correlate the crushed material ratio Px with that molded product on the basis of the delay time Td. In this case, since it is possible to render the computed crushed material ratio Px coincident with the actual crushed material ratio Px of that molded product, the accuracy and reliability of the crushed material ratio Px can be increased further.

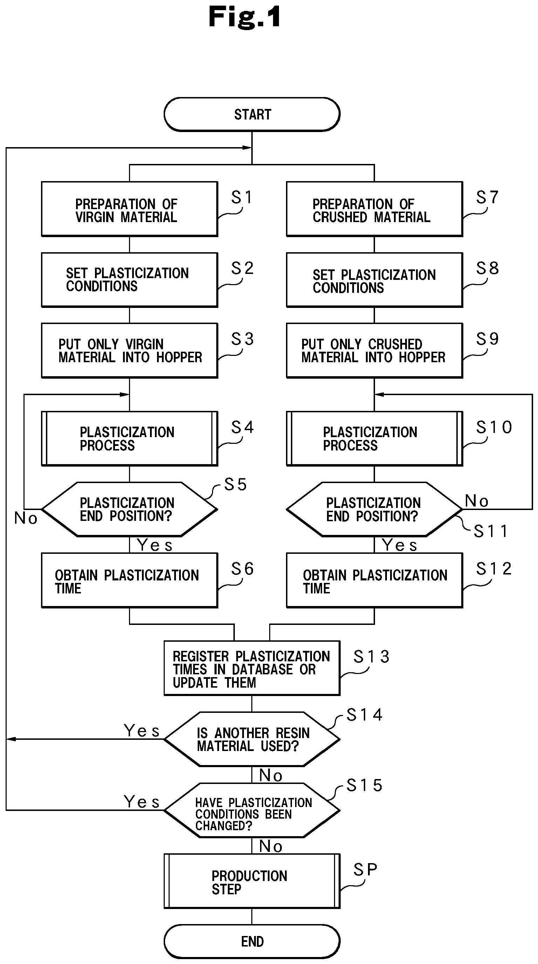

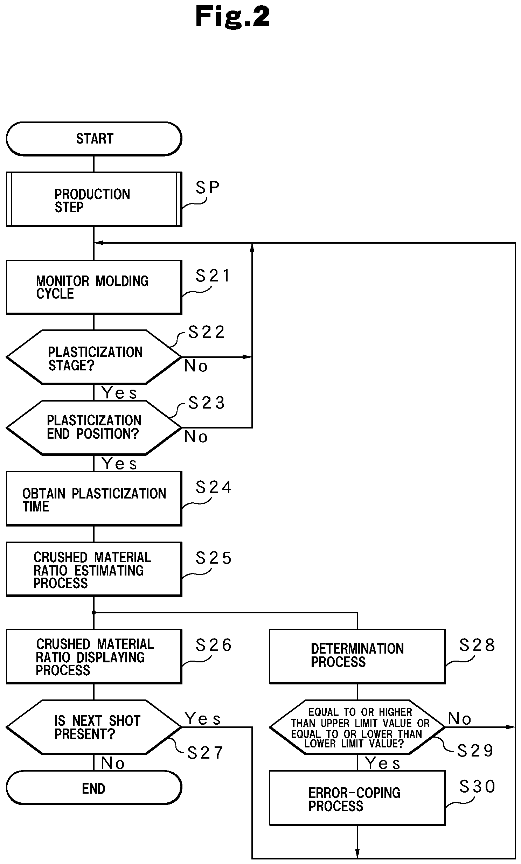

Next, operation of the molding assistance apparatus 1, including the molding assistance method according to the present embodiment for assisting molding performed by using the crushed material mixed material Rm, will be described in accordance with the flowcharts shown in Figs. 1 and 2 and with reference to the drawings.

First, a process in a preparation stage before performance of a production step in which the molding assistance method according to the present embodiment is used will be described with reference to the flowchart shown in Fig. 1.

First, a process of obtaining the virgin material plasticization time Tv for the virgin material Rv (i.e., a predetermined resin material used as a virgin material) is performed by the basic time data obtaining functional section Fo provided in the molding machine controller 2. In this case, the virgin material Rv in the form of pellets or the like is prepared (step S 1). Also, predetermined plasticization conditions are set by the plasticization condition setting functional section Fs in the molding machine controller 2 (step S2). Specifically, one, two or more setting items selected from the rotational speed of the screw 3, the back pressure applied to the screw 3, the set temperature of the heating cylinder, the plasticization end position Xe of the screw 3 can be contained in the plasticization conditions. In the case where such setting items are contained in the plasticization conditions, since the plasticization conditions of the same level as those in the actual production step can be set, it is possible to obtain a rational and reliable crushed material ratio Px.

Subsequently, only the virgin material Rv (i.e., the ratio of the virgin material Rv is 100%) is put into the hopper 6h (step S3). After completion of the preparation for a plasticization process, the plasticization process is executed on the basis of the set plasticization conditions (step S4). In the plasticization process, the screw 3 is positioned at a most forward position (or a predetermined set position), and plasticization is performed from this position. During the plasticization, the screw 3 rotates, the plasticized molten resin is accumulated on the forward side of the screw 3, and the screw 3 gradually moves backward as a result of accumulation of the plasticized molten resin. When the screw 3 moving backward reaches a predetermined plasticization end position Xe set beforehand, the plasticization process is ended (step S5). Also, after completion of the plasticization process, the virgin material plasticization time Tv, which is the time between the point in time when the plasticization process has been started and the point in time when the screw 3 has reached the plasticization end position Xe, is obtained (step S6).

Meanwhile, the crushed material plasticization time Ts is obtained by performing a similar process. In this case, only the crushed material Rs is prepared (step S7). The crushed material Rs is obtained by crushing, by using an unillustrated crushing machine, unnecessary molded products (e.g., sprues and runners and defective molded products) generated after production (molding) of molded products performed by using the predetermined resin material as described above. Individual fragments of the obtained crushed material Rs are random in terms of size and shape. Also, predetermined plasticization conditions are set by the plasticization condition setting functional section Fs (step S8). In this case, plasticization conditions which are basically identical to the plasticization conditions in the above-described process of obtaining the virgin material plasticization time Tv are set.

Subsequently, only the crushed material Rs (i.e., the ratio of the crushed material Rs is 100%) is put into the hopper 6h (step S9). After completion of the preparation for a plasticization process, the plasticization process is executed on the basis of the set plasticization conditions (step S10). In the plasticization process, the screw 3 is positioned at the most forward position (or the predetermined set position), and plasticization is performed from this position. As a result, as in the case of the virgin material Rv, the screw 3 moves backward. When the screw 3 reaches the predetermined plasticization end position Xe set beforehand, the plasticization process is ended (step S11). Also, after completion of the plasticization process, the crushed material plasticization time Ts, which is the time between the point in time when the plasticization process has been started and the point in time when the screw 3 has reached the plasticization end position Xe, is obtained (step S12).

Since the virgin material plasticization time Tv and the crushed material plasticization time Ts can be obtained by the above-described obtaining process, the virgin material plasticization time Tv and the crushed material plasticization time Ts are registered in a database of the internal memory 20m by the basic time data obtaining functional section Fo of the molding machine controller 2 (step S13). In Fig. 4, a database DB1 of a crushed material Rsa, a database DB2 of a crushed material Rsb, etc. are shown as examples of the database. The obtainment of basic time data associated with the predetermined resin material ends after the registration. In the case where another resin material is used, the basic time data for that resin material are obtained by the same processing procedure (step S14). Also, in the case where the virgin material plasticization time Tv and the crushed material plasticization time Ts have changed because of, for example, changing of the plasticization conditions, it is possible to obtain the basic time data by the same processing procedure and update the registered items of the database (step S15). When the process in the preparation stage performed before the production step on the basis of the flowchart of Fig. 1 ends, the predetermined production step is executed (step SP).

Next, the production step in which the molding assistance method according to the present embodiment is used will be described with reference to the flowchart shown in Fig. 2.

It is assumed that the production step is currently being performed by the injection molding machine M by using the crushed material mixed material Rm prepared by mixing the virgin material Rv (the predetermined resin material used as a virgin material) and the crushed material Rs (step SP). Notably, previous setting for the crushed material mixed material Rm as molding conditions can be performed by using a crushed material weight input section 34s and a virgin material weight input section 34v of a material input section 34 shown in Fig. 4.

Meanwhile, in the production step, the molding machine controller 2 monitors the molding cycle of a molding process (step S21). When the molding cycle has proceeded to a plasticization stage and the screw is determined to have reached the plasticization end position Xe, actually measured time data representing the plasticization time in that shot is obtained; namely, a process of obtaining the actually measured time data Dp is performed by the actually measured time data obtaining functional section Fp (steps S22, S23, and S24).

Once the actually measured time data Dp is obtained, the molding machine controller 2 performs a process (computation process) of estimating the crushed material ratio Px by using the crushed material ratio computing functional section Fa (step S25). Specifically, the crushed material ratio computing functional section Fa obtains the crushed material ratio Px in accordance with the equation of $Px = [(Tm - Tv)/(Ts - Tv)] \times 100$ (wt%) by using the virgin material plasticization time Tv and the crushed material plasticization time Ts (the basic time data Do registered in the database) and the above-described crushed material mixed material plasticization time Tm (the actually measured time data Dp).

For the obtained crushed material ratio Px, a predetermined output process is performed by the output processing functional section Fe provided in the molding machine controller 2. Specifically, the obtained crushed material ratio Px is displayed on the above-described display screen Vm shown in Fig. 7, by using the graphic display section Vmg and the numerical value display section Vmn (step S26). In the case where subsequent shots are performed continuously, the same monitoring process is continued (steps S27, S21, etc.).

In addition, the molding machine controller 2 performs a determination process by using the quality determining functional section Fj (step S28). Namely, the molding machine controller 2 performs the determination process for the crushed material ratio Px on the basis of the upper limit value Pxu and the lower limit value Pxd set beforehand. When the crushed material ratio Px is equal to or lower than the upper limit value Pxu or equal to or higher than the lower limit value Pxd, the molding machine controller 2 determines that the crushed material ratio Px is normal and turns on the normal display lamp 4s. In contrast, in the case where the crushed material ratio Px is higher than the upper limit value Pxu or lower than the lower limit value Pxd, the molding machine controller 2 determines that the obtained molded product is an inappropriate molded product and performs a necessary error-coping process by using the alarm display section Vma provided on the display 2d (steps S29 and S30).

As described above, the molding assistance method according to the present embodiment for assisting molding performed by using a crushed material mixed material (the molding assistance apparatus 1), includes, as basic steps (basic configuration):

measuring the virgin material plasticization time Tv, which is the time required for the screw to reach the predetermined plasticization end position Xe when only the virgin material Rv is plasticized, and the crushed material plasticization time Ts, which is the time required for the screw to reach the predetermined plasticization end position Xe when only the crushed material Rs is plasticized, and registering the virgin material plasticization time Tv and the crushed material plasticization time Ts as the basic time data Do;

obtaining the actually measured time data Dp by measuring the crushed material mixed material plasticization time Tm, which is the time required for the screw to reach the predetermined plasticization end position Xe in a predetermined shot when a molded product is produced by using the crushed material mixed material Rm; and

obtaining the crushed material ratio Px in the crushed material mixed material Rm on the basis of the virgin material plasticization time Tv, the crushed material plasticization time Ts, and the crushed material mixed material plasticization time Tm, and performing an output process of outputting the obtained crushed material ratio Px. Therefore, the mixing ratio Px of the crushed material Rs in the actual molded product, which is high in accuracy and validity, can be obtained easily. Consequently, it is possible to eliminate the problem of the possibility arising that the amount of the crushed material Rs is excessively large and therefore the quality cannot be guaranteed and to eliminate the problem that the amount of the crushed material Rs is excessively small and therefore the crushed material Rs cannot be recycled sufficiently.

The preferred embodiment has been described in detail. However, the present invention is not limited to such embodiment, and, as to structures of details, shapes, raw materials, materials, quantities, numerical values, methods, etc., alteration, addition, and deletion can be performed arbitrarily within a range not departing from the gist of the present invention.

For example, there has been shown the case where one, two or more setting items selected from the rotational speed of the screw 3, the back pressure applied to the screw 3, the set temperature of the heating cylinder 6, the plasticization end position Xe of the screw 3 are contained in the plasticization conditions by the plasticization condition setting functional section Fs. However, other plasticization conditions may be contained. Although the case where both the upper limit value Pxu and the lower limit value Pxd are set for the crushed material ratio Px has been shown, the case where only one of the upper limit value Pxu and the lower limit value Pxd is set is not excluded, and, in particular, only the upper limit value Pxu may be set. Moreover, each of the upper limit value Pxu and the lower limit value Pxd may be set to be stepwise. More fine determination may be performed by setting, for example, a first upper limit value (preliminary upper limit value) and a second upper limit value (main upper limit value) as the upper limit value Pxu, and issuing a preliminary alarm. Meanwhile, the case where each of the virgin material plasticization time Tv and the crushed material plasticization time Ts is registered as the basic time data Do has been shown. However, a computing equation for obtaining the crushed material ratio Px may be registered and the crushed material ratio Px may be obtained from this computing equation and the actually measured time data Dp. In addition, the quality determining functional section Fj provided in the molding machine controller 2 is not an essential constituent element and is not necessarily required to be provided. Moreover, although provision of the alarm display in the output processing functional section Fe is desirable, it is not necessarily an essential constituent element.

## Industrial Applicability

The present invention can be used as a method and an apparatus for assisting molding performed in various types of injection molding machines in which a crushed material mixed material prepared by mixing a virgin material and a crushed material at a predetermined ratio is plasticized for injection molding.

## Reference Signs List

1: molding assistance apparatus, 2: molding machine controller, 2d: display, 3: screw, Rm: crushed material mixed material, Rv: virgin material, Rs: crushed material, Px: crushed material ratio, Fs: plasticization condition setting functional section, Fo: basic time data obtaining functional section, Fp: actually measured time data obtaining functional section, Fa: crushed material ratio computing functional section, Fe: output processing functional section, Fj: quality determining functional section, Pxu: upper limit value, Pxd: lower limit value, Vmn: numerical value display section, Vmg: graphic display section, Vma: alarm display section

## Citation List

Patent Document 1: Japanese Patent Application Laid-Open No. 2007-125818
Patent Document 2: Japanese Patent Application Laid-Open No. H7(1995)-304038

## Claims

1.

A molding assistance method for an injection molding machine in which a crushed material mixed material prepared by mixing a virgin material and a crushed material at a predetermined ratio is plasticized for injection molding, the molding assistance method being **characterized by** comprising:

measuring beforehand a virgin material plasticization time, which is a time required for a screw to reach a predetermined plasticization end position when only the virgin material used for the crushed material mixed material is plasticized under predetermined plasticization conditions, a crushed material plasticization time, which is a time required for the screw to reach the predetermined plasticization end position when only the crushed material used for the crushed material mixed material is plasticized under the plasticization conditions, and registering the virgin material plasticization time and the crushed material plasticization time as basic time data; obtaining actually measured time data by measuring a crushed material mixed material plasticization time when a molded product is produced by using the crushed material mixed material, the crushed material mixed material plasticization time being a time required for the screw to reach the plasticization end position in a predetermined shot; and obtaining a ratio of the crushed material in the crushed material mixed material on the basis of the virgin material plasticization time, the crushed material plasticization time, and the crushed material mixed material plasticization time, and performing an output process of outputting the obtained crushed material ratio.

2. A molding assistance method according to claim 1, wherein the crushed material ratio is obtained by the following computing equation:

$$Px = [(Tm - Tv)/ (Ts - Tv)] \times 100 \ (wt\%)$$

where Px represents the crushed material ratio (wt%), Tm represents the crushed material mixed material plasticization time (sec), Tv represents the virgin material plasticization time (sec), and Ts represents the crushed material plasticization time (sec).

3. A molding assistance method according to claim 1, wherein the crushed material ratio is obtained in each shot or in shots at predetermined intervals and is outputted.

4. A molding assistance method according to claim 1, wherein, after obtainment of the crushed material mixed material plasticization time, a delay time needed for the crushed material ratio to reflect on a molded product is computed on the basis of at least the capacity of the screw, and the crushed material ratio is correlated with that molded product on the basis of the delay time.

5. A molding assistance method according to claim 1, wherein an upper limit value is set for the crushed material ratio, and a quality determination process of determining that a molded product whose crushed material ratio is equal to or lower than the upper limit value is a conforming product.

6. A molding assistance method according to claim 1, wherein a lower limit value is set for the crushed material ratio, and a quality determination process of determining that a molded product whose crushed material ratio is equal to or higher than the lower limit value is a conforming product.

7. A molding assistance apparatus for an injection molding machine in which a crushed material mixed material prepared by mixing a virgin material and a crushed material at a predetermined ratio is plasticized for injection molding, the molding assistance apparatus being **characterized by** comprising a molding machine controller which includes:

a plasticization condition setting functional section for setting predetermined plasticization conditions;
a basic time data obtaining functional section which measures a virgin material plasticization time, which is a time required for a screw to reach a predetermined plasticization end position when only the virgin material used for the crushed material mixed material is plasticized under the plasticization conditions, a crushed material plasticization time, which is a time required for the screw to reach the predetermined plasticization end position when only the crushed material used for the crushed material mixed material is plasticized under the plasticization conditions, and registers the virgin material plasticization time and the crushed material plasticization time as basic time data;
an actually measured time data obtaining functional section which measures a crushed material mixed material plasticization time when a molded product is produced by using the crushed material mixed material, the crushed material mixed material plasticization time being a time required for the screw to reach the plasticization end position in a predetermined shot, the actually measured time data obtaining functional section obtaining the measured crushed material mixed material plasticization time as actually measured time data;
a crushed material ratio computing functional section which obtains a ratio of the crushed material in the crushed material mixed material on the basis of the virgin material plasticization time, the crushed material plasticization time, and the crushed material mixed material plasticization time; and
an output processing functional section which performs an output process of outputting the obtained crushed material ratio.

8. A molding assistance apparatus according to claim 7, wherein the plasticization condition setting functional section sets, as the plasticization conditions, one, two or more setting items selected from a rotational speed of the screw, a back pressure applied to the screw, a set temperature of a heating cylinder, and a plasticization end position of the screw.

9. A molding assistance apparatus according to claim 7, wherein the molding machine controller includes, as the output processing functional section, a display which displays the crushed material ratio graphically and/or by using a numerical value.

10. A molding assistance apparatus according to claim 7, wherein the molding machine controller includes a quality determining functional section which sets an upper limit value for the crushed material ratio obtained by the crushed material ratio computing functional section and determines that a molded product whose crushed material ratio is equal to or lower than the upper limit value is a conforming product.

11. A molding assistance apparatus according to claim 10, wherein the molding machine controller includes the output processing functional section which determines that a molded product whose crushed material ratio is higher than the upper limit value is an inappropriate molded product and performs a predetermined output process, including displaying an alarm, by using a display.

12. A molding assistance apparatus according to claim 7, wherein the molding machine controller includes a quality determining functional section which sets a lower limit value for the crushed material ratio obtained by the crushed material ratio computing functional section and determines that a molded product whose crushed material ratio is equal to or higher than the lower limit value is a conforming product.

13. A molding assistance apparatus according to claim 12, wherein the molding machine controller includes the output processing functional section which determines that a molded product whose crushed material ratio is lower than the lower limit value is an inappropriate molded product and performs a predetermined output process, including displaying an alarm, by using a display.

# Fig.1

START

| | |
|---|---|
| PREPARATION OF VIRGIN MATERIAL — S1 | PREPARATION OF CRUSHED MATERIAL — S7 |
| SET PLASTICIZATION CONDITIONS — S2 | SET PLASTICIZATION CONDITIONS — S8 |
| PUT ONLY VIRGIN MATERIAL INTO HOPPER — S3 | PUT ONLY CRUSHED MATERIAL INTO HOPPER — S9 |
| PLASTICIZATION PROCESS — S4 | PLASTICIZATION PROCESS — S10 |
| PLASTICIZATION END POSITION? — S5 | PLASTICIZATION END POSITION? — S11 |
| No / Yes | No / Yes |
| OBTAIN PLASTICIZATION TIME — S6 | OBTAIN PLASTICIZATION TIME — S12 |

REGISTER PLASTICIZATION TIMES IN DATABASE OR UPDATE THEM — S13

Yes ← IS ANOTHER RESIN MATERIAL USED? — S14

No

Yes ← HAVE PLASTICIZATION CONDITIONS BEEN CHANGED? — S15

No

PRODUCTION STEP — SP

END

# Fig.2

START

PRODUCTION STEP — SP

MONITOR MOLDING CYCLE — S21

PLASTICIZATION STAGE? — S22 → No

Yes

PLASTICIZATION END POSITION? — S23 → No

Yes

OBTAIN PLASTICIZATION TIME — S24

CRUSHED MATERIAL RATIO ESTIMATING PROCESS — S25

CRUSHED MATERIAL RATIO DISPLAYING PROCESS — S26

IS NEXT SHOT PRESENT? — S27 → Yes / No

END

DETERMINATION PROCESS — S28

EQUAL TO OR HIGHER THAN UPPER LIMIT VALUE OR EQUAL TO OR LOWER THAN LOWER LIMIT VALUE? — S29 → No / Yes

ERROR-COPING PROCESS — S30

# Fig.3

EP 4 506 139 A1

# Fig.4

Fs — PLASTICIZATION CONDITION SETTING FUNCTIONAL SECTION

Fo — BASIC TIME DATA OBTAINING FUNCTIONAL SECTION

Fp — ACTUALLY MEASURED TIME DATA OBTAINING FUNCTIONAL SECTION

Fa — CRUSHED MATERIAL RATIO COMPUTING FUNCTIONAL SECTION

Fe — OUTPUT PROCESSING FUNCTIONAL SECTION

Fj — QUALITY DETERMINATION FUNCTIONAL SECTION

1

2

7 — HEATING GROUP SECTION (TEMPERATURE SENSOR)

13 — SCREW DRIVE SECTION

20 — CONTROLLER MAIN BODY

24 — DRIVER GROUP

INTERNAL MEMORY

20m

2d — DISPLAY (TOUCH PANEL)

2dt

DB1 — DATABASE OF CRUSHED MATERIAL Rsa

DB2 — DATABASE OF CRUSHED MATERIAL Rsb

Ps — FLOW ANALYSIS PROCESSING PROGRAM

Pi — CRUSHED MATERIAL ASSISTANCE PROCESSING PROGRAM

34s — CRUSHED MATERIAL WEIGHT INPUT SECTION

34v — VIRGIN MATERIAL WEIGHT INPUT SECTION

34

2dd — DISPLAY SECTION

# Fig.5

# Fig.6

# Fig.7

CRUSHED
MATERIAL

VIRGIN
MATERIAL

CRUSHED
MATERIAL
RATIO      3 0 . 0   (wt%)

UPPER
LIMIT VALUE   3 5 . 0   (wt%)

LOWER
LIMIT VALUE   2 5 . 0   (wt%)

LOWER
LIMIT ALARM     NORMAL     UPPER
LIMIT ALARM

Europäisches
Patentamt

European
Patent Office

Office européen
des brevets

# EUROPEAN SEARCH REPORT

Application Number

EP 24 19 1074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/242023 A1 (OKUYAMA HIROSHI [JP]) 4 August 2022 (2022-08-04) * paragraph [0025] - paragraph [0065] * * figures 1-5 * | 1-13 | INV. B29C45/76 ADD. B29C45/00 B29K105/26 |
| A | US 2020/078999 A1 (COLLINS BRYLER [US] ET AL) 12 March 2020 (2020-03-12) * line 38, paragraph 19; figures 1-5 * | 1-13 | |
| A | JP H07 80905 A (FANUC LTD) 28 March 1995 (1995-03-28) * paragraph [0001]; figures 1-7 * * paragraph [0016] - paragraph [0034] * | 1-13 | |
| A | JP H08 207042 A (OLYMPUS OPTICAL CO) 13 August 1996 (1996-08-13) * paragraphs [0001], [0002]; figures 1-4 * * paragraph [0015] - paragraph [0031] * | 1-13 | |
| A | EP 0 674 984 A1 (FANUC LTD [JP]) 4 October 1995 (1995-10-04) * page 1 * * page 2, line 38 - page 8, line 55 * * figures 1-5 * | 1-13 | TECHNICAL FIELDS SEARCHED (IPC) B29C B29K |

The present search report has been drawn up for all claims

| Place of search | Date of completion of the search | Examiner |
|---|---|---|
| Munich | 12 December 2024 | Raicher, Gerald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 1074

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | Publication date | Patent family member(s) | | Publication date |
|---|---|---|---|---|
| US 2022242023 A1 | 04-08-2022 | CN | 113825615 A | 21-12-2021 |
| | | DE | 112020002436 T5 | 17-02-2022 |
| | | JP | 7274348 B2 | 16-05-2023 |
| | | JP | 2020189421 A | 26-11-2020 |
| | | US | 2022242023 A1 | 04-08-2022 |
| | | WO | 2020235147 A1 | 26-11-2020 |
| US 2020078999 A1 | 12-03-2020 | CA | 3111342 A1 | 12-03-2020 |
| | | CN | 112969564 A | 15-06-2021 |
| | | EP | 3846997 A1 | 14-07-2021 |
| | | JP | 2021535852 A | 23-12-2021 |
| | | US | 2020078999 A1 | 12-03-2020 |
| | | WO | 2020051391 A1 | 12-03-2020 |
| JP H0780905 A | 28-03-1995 | NONE | | |
| JP H08207042 A | 13-08-1996 | NONE | | |
| EP 0674984 A1 | 04-10-1995 | DE | 69430049 T2 | 28-11-2002 |
| | | EP | 0674984 A1 | 04-10-1995 |
| | | JP | 3670302 B2 | 13-07-2005 |
| | | JP | H0732430 A | 03-02-1995 |
| | | KR | 0145195 B1 | 15-07-1998 |
| | | KR | 950703442 A | 20-09-1995 |
| | | US | 5792395 A | 11-08-1998 |
| | | WO | 9503161 A1 | 02-02-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020001183 A
- JP 2021121959 A
- JP 2007125818 A
- JP H71995304038 A